# EUROPÄISCHE PATENTSCHRIFT

(11) **EP 1 477 095 B1**
(45) Veröffentlichungstag und Bekanntmachung des Hinweises auf die Patenterteilung: **07.09.2005**
(21) Anmeldenummer: 03010876.5
(22) Anmeldetag: 15.05.2003
(51) Int. Cl.: A47J 37/06

(54) **Grillrost**
Grill grid
Grille

(43) Veröffentlichungstag der Anmeldung: 17.11.2004
(73) Patentinhaber: Kehrmann, Alexander, 46509 Xanten (DE)
(72) Erfinder: Kehrmann, Alexander, 46509 Xanten (DE)
(74) Vertreter: Ksoll, Peter

(56) Entgegenhaltungen:
- DE-C- 19 529 005
- DE-U- 29 907 593
- US-A- 4 021 204

## Beschreibung

Die Erfindung betrifft einen Grillrost gemäß den Merkmalen im Oberbegriff von Patentanspruch 1.

Durch die DE 299 07 593 U1 zählt ein Grillrost zum Stand der Technik, der die Funktion eines herkömmlichen Drahtgitterrostes und einer Grillschale in einem Bauteil vereint. Der Rost soll ein zickzackförmiges Profil besitzen und aus Aluminium- oder Edelstahlblech bestehen, welches mindestens 5 mm dick ist. Hierdurch ist der Rost relativ schwer und unhandlich. Nach Gebrauch muss der Rost aufwändig gereinigt werden.

Grillschalen sind beispielsweise in der DE 195 29 005 C1 oder der DE 43 09 784 C1 beschrieben. Diese in der Praxis bewährten Grillschalen sind aus einer Metallfolie gefertigt, vornehmlich aus Aluminium, und weisen voneinander beabstandete Saftrillen mit dazwischen liegenden spitzdachförmigen Rippen auf. In den Rippen sind Gasdurchtrittsöffnungen vorgesehen. Die Rippenscheitel bilden die Grillfläche.

Die Grillschalen haben den Vorteil, dass das während des Grillvorgangs aus dem Grillgut austretende Fett und Bratensaft an den Rippen abfließen und in den Saftrinnen aufgefangen werden kann. Damit wird vermieden, dass insbesondere das Fett in die Glut tropft, wodurch gesundheitsgefährdende Stoffe erzeugt werden. Außerdem liegt das Grillgut so während des Grillvorgangs nicht in Fett oder Bratensaft.

Zum Grillen werden die Grillschalen üblicherweise auf den herkömmlichen Drahtgitterrost gestellt. Hierdurch vergrößert sich aber der Abstand des Grillgures zur Glut. Unvorteilhaft ist ferner, dass die Grillschalen auf dem Rost verrutschen können. Dies kann passieren, wenn Grillgut auf der Grillfläche anklebt oder aber wenn der Rost in der Höhe verstellt werden muss. Besonders ärgerlich ist es, wenn hierbei Grillgut von der Grillschale fällt und verschmutzt oder vollkommen unbrauchbar wird.

Ausgehend vom Stand der Technik liegt der Erfindung die Aufgabe zugrunde, einen für die praktische Anwendung verbesserten Grillrost zu schaffen.

Die Lösung dieser Aufgabe besteht nach der Erfindung in einem Grillrost gemäß den Merkmalen von Patentanspruch 1, bei dem die Aufhängung ringförmig gestaltet ist und die Grillschale aus einer Metallfolie besteht mit einem umlaufenden stabilen Rand, über den die Grillschale mit der Aufhängung lösbar verbunden ist.

Auf diese Weise wird ein für die praktische Anwendung komfortabler Grillrost geschaffen. Die Konstruktion ist sehr leicht. Dennoch kann die Grillschale mit der Aufhängung gut gehandhabt und transportiert werden, selbst wenn das Grillgut auf der Grillschale liegt.

Die Fixierung der Grillschale in der Aufhängung erfolgt über ihren stabil ausgebildeten umlaufenden Rand. Dieser kommt mit der Aufhängung kraft- und/oder formschlüssig in Kontakt. Die Grillschale wird in die Aufhängung eingehängt. Für die Praxis bietet es sich an, den Rand mit einem umlaufenden Kragen zu versehen, der über die in Form eines Ringkörpers gestaltete Aufhängung greift. Möglich ist es auch, den Rand selbst konisch zu gestalten und die Aufhängung im Querschnitt und Durchmesser so auszulegen, dass die Grillschale durch ihr Eigengewicht in der Aufhängung gehalten wird.

Die Aufhängung wird vorzugsweise durch einen in sich geschlossenen Ringkörper aus einem stabilen Draht gebildet. Der Ringkörper kann grundsätzlich rechteckig oder rund konfiguriert sein.

Das Grillgut kann auf der durch die Grillschale gebildeten Grillfläche gegart werden. Hierbei werden die bekannten Vorteile einer Grillschale genutzt. Das Tropfen von Fett in die Glut wird vermieden. Die unterhalb der Grillschale aus der Glut aufsteigenden aromatischen Grillgase treten durch die Gasdurchtrittsöffnungen und umströmen das Grillgut.

Die Höhenverstellung des Grillrostes oder auch ein Transport des Grillrostes ist auch mit aufliegendem Grillgut über den Handgriff problemlos möglich.

Nach dem Gebrauch wird die Grillschale von der Aufhängung getrennt und ungereinigt entsorgt. Eine aufwändige Reinigung des Grillrostes kann entfallen.

Während des Grillvorgangs ist es möglich, die Grillschalen auszutauschen, sei es weil eine Grillschale verschmutzt ist oder um verschiedenartige Grillgüter, beispielsweise Fleisch und Fisch, auf getrennten Grillschalen zu garen.

Nach den Merkmalen von Patentanspruch 2 ist der Handgriff mit der Aufhängung verbunden. Ferner weist die Aufhängung nach außen abstehende Halteelemente auf. Diese Maßnahmen unterstützen die praktische Anwendung des Grillrostes in vorteilhafter Weise.

Eine weitere vorteilhafte Ausgestaltung besteht nach den Merkmalen von Patentanspruch 3 darin, dass die Gasdurchtrittsöffnungen in den Rippenscheiteln vorgesehen sind und parallel zur Scheitellängslinie verlaufen. Hierdurch wird erreicht, dass der typische Grillgeschmack des Grillguts erhalten bleibt. Ferner kann die Grillzeit verkürzt werden.

Zusätzlich kann die in Form eines Rings gestaltete Aufhängung durch eine in ihrer Horizontalebene verlaufende Strebe versteift sein, wie dies Patentanspruch 4 vorsieht. Die Strebe ist so gestaltet, dass sie an die Kontur der Unterseite der Grillschale angepasst ist und diese unterstützt. Diese Maßnahme trägt insbesondere zu einer Stabilisierung der Grillschale in der Horizontalebene der Aufhängung bei. Eine Durchbiegung unter der Last des Grillguts wird so vermieden.

Als für die Praxis besonders vorteilhaft wird eine kreisringförmige Aufhängung mit einer geraden Grillschale angesehen.

Die Erfindung ist nachfolgend anhand eines in den Zeichnungen dargestellten Ausführungsbeispiels näher beschrieben. Es zeigen:
- Figur 1: einen erfindungsgemäßen Grillrost in der Draufsicht;
- Figur 2: einen vertikalen Querschnitt durch die Grillschale des Grillrostes;
- Figur 3: in der Draufsicht die Aufhängung des Grillrostes und
- Figur 4: im vertikalen Querschnitt eine alternative Ausführungsform einer Grillschale.

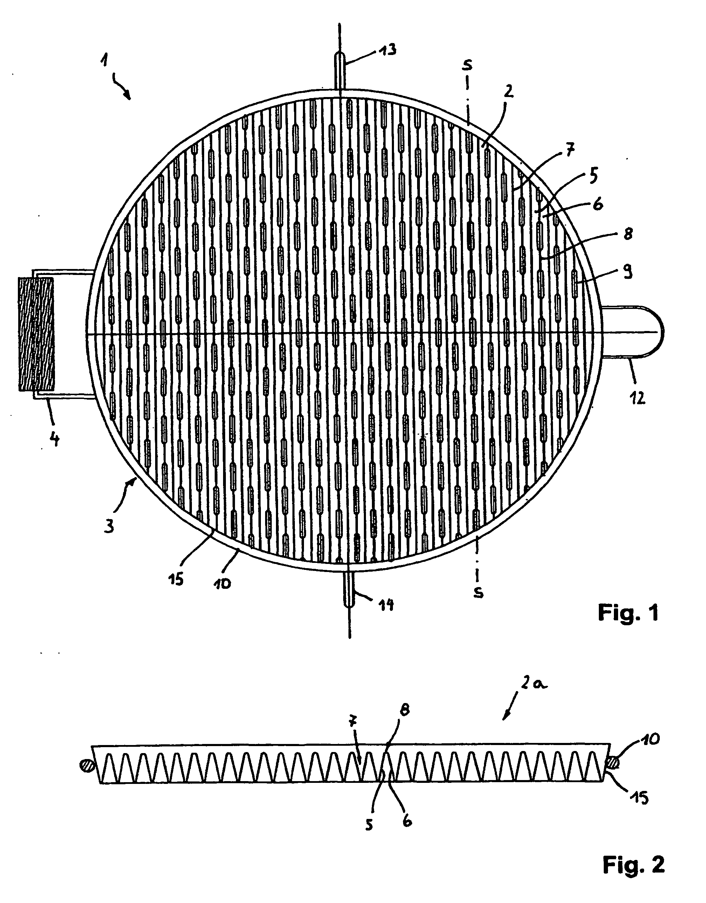

In den Figuren 1 bis 4 tragen einander entsprechende Bauteile oder Bauteilkomponenten die gleichen Bezugszeichen.

Figur 1 zeigt einen Grillrost 1 in Draufsicht. Der Grillrost 1 umfasst eine runde Grillschale 2 und eine Aufhängung 3 mit einem Handgriff 4.

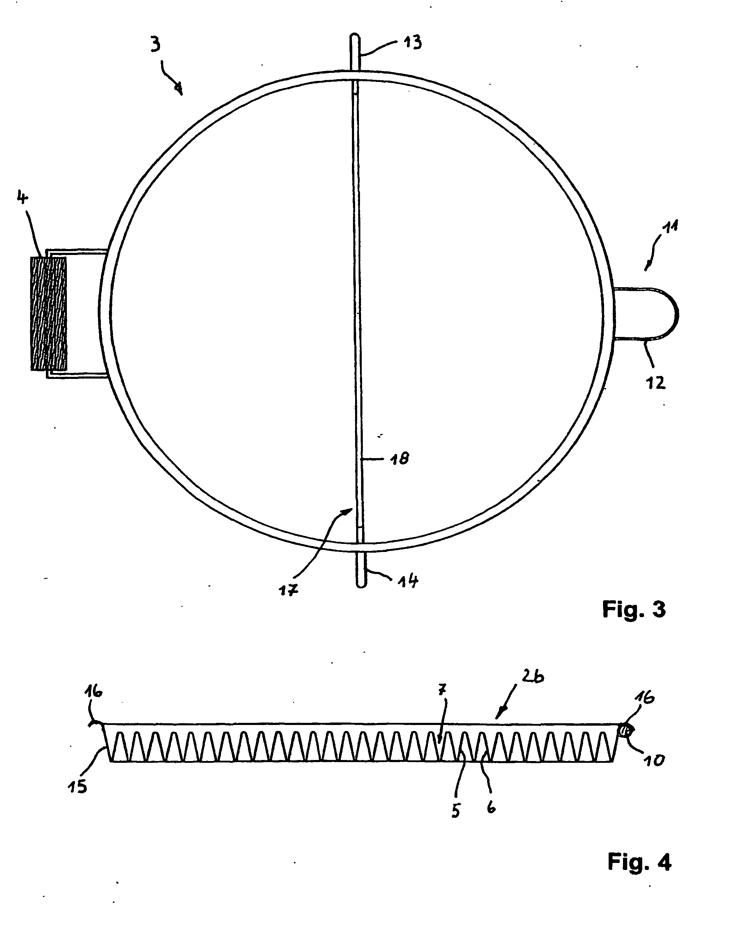

Die Grillschale 2 ist aus einer Metallfolie, insbesondere einer Aluminiumfolie, gefertigt. Die Figuren 2 und 4 zeigen zwei Ausführungsformen von Grillschalen 2a, 2b im vertikalen Querschnitt. Die Grillschalen 2a, 2b weisen voneinander beabstandete spitzdachförmige Rippen 5, 6 mit dazwischen liegenden Saftrillen 7 auf. Die Rippenscheitel 8 bilden die eigentliche Grillfläche, auf der das Grillgut aufliegt. Durch Gasdurchtrittsöffnungen 9 in den Rippen 5, 6 strömen die unterhalb der Grillschale 2 aus der Glut aufsteigenden Grillgase und umströmen das Grillgut. Die Gasdurchtrittsöffnungen 9 sind in den Rippenscheiteln 8 vorgesehen. Sie sind langlochartig gestaltet und verlaufen parallel zur Scheitellängslinie S.

Insbesondere anhand der Figur 3 wird deutlich, dass die Aufhängung 3 ringförmig gestaltet ist. Sie umfasst einen geschlossenen runden Ringkörper 10 mit dem hieran fest angelenkten Handgriff 4. Ferner sind an der Aufhängung 3 abstehende Halteelemente 11 vorgesehen in Form einer dem Handgriff 4 gegenüberliegenden Einhängelasche 12 sowie zwei seitlich quer abstehenden Dornen 13, 14.

Die Grillschale 2 bzw. 2a, 2b ist über ihren umlaufenden stabil ausgeführten Rand 15 mit der Aufhängung 3 lösbar verbunden.

Bei der Ausführungsform gemäß Figur 2 kommt die Grillschale 2a mit ihrem konisch gestalteten umlaufenden Rand 15 direkt am Innenumfang des Ringkörpers 10 zur Anlage und wird so in der Aufhängung 3 gehalten.

Bei der Grillschale 2b gemäß der Figur 4 ist am Rand 15 zusätzlich ein Kragen 16 vorgesehen, über den die Grillschale 2b in den Ringkörper 10 eingehängt werden kann. Der Kragen 16 kann ebenfalls umlaufend oder abschnittsweise ausgeführt sein.

Grundsätzlich ist der Ringkörper 10 der Aufhängung 3 stabil genug, um eine Grillschale 2, 2a, 2b zu tragen. Vorteilhaft kann die Aufhängung 3 noch mit einer Versteifung 17 versehen sein, welche insbesondere der eingehängten Grillschale 2, 2a, 2b zusätzliche Stabilität verleiht. Bei der Aufhängung 3, wie in der Figur 3 dargestellt, weist der Ringkörper 10 eine in der Horizontalebene der Aufhängung 3 liegende Strebe 18 auf, die mit dem Ringkörper 10 fest verbunden ist. Die Strebe 18 ist der Kontur einer Grillschale 2, 2a, 2b angepasst, kommt unterseitig einer eingehängten Grillschale 2, 2a, 2b zur Anlage und stützt diese ab.

### Bezugszeichenaufstellung

- 1 -: Grillrost
- 2 -: Grillschale
- 2a -: Grillschale
- 2b -: Grillschale
- 3 -: Aufhängung
- 4 -: Handgriff
- 5 -: Rippe
- 6 -: Rippe
- 7 -: Saftrille
- 8 -: Rippenscheitel
- 9 -: Gasdurchtrittsöffnung
- 10 -: Ring
- 11 -: Halteelement
- 12 -: Einhängelasche
- 13 -: Dorn
- 14 -: Dom
- 15 -: Rand
- 16 -: Kragen
- 17 -: Versteifung
- 18 -: Strebe

- S -: Scheitellängslinie

## Patentansprüche

1. Grillrost mit einer Grillschale (2, 2a, 2b), einer Aufhängung (3) und einem Handgriff (4), wobei die Grillschale (2, 2a, 2b) spitzdachförmig angeordnete Rippen (5, 6) mit dazwischenliegenden Saftrillen (7) aufweist und in den Rippen (5, 6) Gasdurchtrittsöffnungen (9) vorgesehen sind sowie die Rippenscheitel (8) eine Grillfläche bilden, **dadurch gekennzeichnet, dass** die Aufhängung (3) ringförmig gestaltet ist sowie die Grillschale (2, 2a, 2b) aus einer Metallfolie besteht und einen umlaufenden Rand (15) aufweist, wobei die Grillschale (2, 2a, 2b) über den Rand (15) mit der Aufhängung (3) lösbar verbunden ist.

2. Grillrost nach Anspruch 1, **dadurch gekennzeichnet, dass** der Handgriff (4) mit der Aufhängung (3) verbunden ist und an der Aufhängung (3) von dieser nach außen abstehende Halteelemente (11) vorgesehen sind.

3. Grillrost nach Anspruch 1 oder 2, **dadurch gekennzeichnet, dass** die Gasdurchtrittöffnungen (9) in den Rippenscheiteln (8) vorgesehen sind und parallel zur Scheitellängslinie (S) verlaufen.

4. Grillrost nach einem der Ansprüche 1 bis 3, **dadurch gekennzeichnet, dass** die Aufhängung (3) durch eine in ihrer Horizontalebene liegende Strebe (18) versteift ist.

## Claims

1. Grill grid having a grill bowl (2, 2a, 2b), a suspending device (3) and a handle (4), wherein the grill bowl (2, 2a, 2b)comprises ribs (5,6) which are disposed in the shape of a pointed roof with interpositioned juice grooves (7) and in the ribs (5, 6) there are provided gas through-passage orifices (9) and the apexes (8) of the ribs form a grilling surface, **characterised in that** the suspending device (3) is designed in an annular manner and the grill bowl (2, 2a, 2b) consists of a metal foil and comprises a circumferential brim (15), wherein the grill bowl (2, 2a, 2b) is releasably connected via the brim (15) to the suspending device (3).

2. Grill grid according to claim 1, **characterised in that** the handle (4) is connected to the suspending device (3) and holding elements (11) are provided on the suspending device (3) from where they protrude outwards.

3. Grill grid according to claim 1 or 2, **characterised in that** the gas through-passage orifices (9) are provided in the rib apexes (8) and extend in parallel with the longitudinal apex line (S).

4. Grill grid according to any one of claims 1 to 3, **characterised in** the suspending device (3) is reinforced by a brace (18) which lies in its horizontal plane.

## Revendications

1. Gril de rôtissage comportant un réceptacle de gril de rôtissage (2, 2a, 2b), une suspension (3) et une poignée (4), dans lequel le réceptacle de gril de rôtissage (2, 2a, 2b) présente des nervures (5,6) disposées en forme de toit pointu avec des sillons d'écoulement de jus (7) intermédiaires et dans les nervures (5,6) sont prévues des ouvertures de passage de gaz (9) et les sommets des nervures (8) forment une surface de gril de rôtissage,
**caractérisé en ce que**,
la suspension (3) est de configuration annulaire et le réceptacle de gril de rôtissage (2, 2a, 2b) consiste en une feuille métallique et présente un bord circulaire (15), dans lequel le réceptacle de gril de rôtissage (2,2a,2b) est raccordé de façon amovible par le bord (15) à la suspension (3).

2. Gril de rôtissage selon la revendication 1,
**caractérisé en ce que**,
la poignée (4) est raccordée à la suspension (3) et sur la suspension (3) sont prévus des éléments de support (11) faisant saillie vers l'extérieur par rapport à celle-ci.

3. Gril de rôtissage selon la revendication 1 ou 2,
**caractérisé en ce que**,
les ouvertures de passage de gaz (9) sont prévues dans les sommets de nervure (8) et s'étendant parallèlement à la ligne longitudinale apicale (S).

4. Gril de rôtissage selon l'une des revendications 1 à 3,
**caractérisé en ce que**,
la suspension (3) est renforcée par une entretoise (18) située dans son plan horizontal.
